Europäisches Patentamt

European Patent Office

Office européen des brevets

(11) Numéro de publication: **0 373 990**

**A1**

(12) # DEMANDE DE BREVET EUROPEEN

(21) Numéro de dépôt: **89403269.7**

(22) Date de dépôt: **27.11.89**

(51) Int. Cl.5: **B23P 21/00**, //E05B17/00

(30) Priorité: **14.12.88 FR 8816450**

(43) Date de publication de la demande:
**20.06.90 Bulletin 90/25**

(84) Etats contractants désignés:
**AT BE CH DE ES GB GR IT LI LU NL SE**

(71) Demandeur: **FERCO INTERNATIONAL Usine de Ferrures de Bâtiment Société à responsabilité limitée dite**
**2, rue du Vieux-Moulin Reding**
**F-57400 Sarrebourg(FR)**

(72) Inventeur: **Kautt, Jean-Jacques**
**24 rue Pertois**
**F-67000 Strasbourg(FR)**

(74) Mandataire: **Rodhain, Claude et al**
**Cabinet Claude Rodhain 30, rue la Boétie**
**F-75008 Paris(FR)**

(54) Installation pour l'assemblage de pièces mécaniques élémentaires destinées à former un ensemble structurel.

(57) L'invention concerne une installation pour le montage et l'assemblage de pièces élémentaires complémentaires les unes des autres.

L'installation est caractérisée en ce qu'elle est constituée :
- de lignes d'approvisionnement (3, 9, 17, 20, 45, 49, 54, 38, 68, 72) acheminant les pièces depuis les magasins distributeurs (4, 10, 18, 21, 44, 50, 55, 30, 28, 69, 72) vers un circuit de montage (C) constitué d'au moins un convoyeur pas-à-pas sur lequel sont fixées des platines-supports de pièces (2, 42₁, 42₂),
- d'organes de prélèvement (6, 7, 16, 19, 43, 48, 37, 61, 40, 25, 67, 74) pour amener les pièces des lignes d'approvisionnement au circuit de montage (C),
- de moyens d'assemblage des pièces (12, 23, 59, 60, 34, 35, 76, 77) situés, par rapport au sens de déplacement du circuit de montage (C), en aval des organes de prélèvement,
- de moyens (11, 22, 52, 58, 33, 64, 70, 78, 79, 80) pour le contrôle du positionnement et de l'assemblage des pièces sur leur platine-support respective (2, 42₁, 42₂).

FIG.1

## INSTALLATION POUR L'ASSEMBLAGE DE PIECES MECANIQUES ELEMENTAIRES DESTINEES A FORMER UN ENSEMBLE STRUCTUREL.

L'invention concerne une installation pour le montage et l'assemblage de pièces élémentaires, complémentaires les unes des autres, destinées à être réunies dans un ensemble structurel tel que les composants mécaniques d'un boîtier de crémone de portes ou fenêtres.

Les unités structurelles, qu'elles soient mécaniques ou électriques, mettent généralement en oeuvre des composants unitaires qui peuvent être soit pré-assemblés en sous-ensembles, ultérieurement regroupés, soit assemblés successivement les uns aux autres pour former progressivement la structure définie. S'agissant, de boîtier de crémone, formé principalement de deux demi-coquilles (fond et couvercle) renfermant des pièces élémentaires telles que chevalets, axes, douilles, fouillots et autres tringles ou plaquettes, il est usuel de réunir manuellement ces composants par assemblage et rivetage. Or, ces opérations successives de montage entraînent, en raison de leur caractère manuel, un coût de production élevé du fait des multiples manipulations et temps morts dus à la reprise, aux positionnements et à l'assemblage des pièces. De surcroît, les temps de montage étant inhérents au savoir faire et à la dextérité de l'opérateur, on observe de fortes variations dans les cycles et qualité de fabrication, ce qui nuit à la rentabilité et à la productivité. En fait, dans le détail, l'opérateur doit prélever deux premières pièces élémentaires dans des réceptacles (où elles sont placées en vrac par catégorie) les assembler à la main, puis les introduire dans un poste de rivetage pour réaliser leur jonction, en contrôler ensuite la bonne exécution, puis prélever à nouveau une troisième pièces pour l'accoupler aux deux précédentes, et ainsi de suite.

Ces manipulations sont longues et fastidieuses en raison de leur répétitivité et entraînent rapidement des baisses sensibles de rendement.

L'invention a donc pour but de remédier à ces divers inconvénients et concerne à cet effet une installation pour l'assemblage en continu de pièces élémentaires, complémentaires les unes des autres, et destinée à former un ensemble structurel tel qu'un boîtier de crémone de porte ou fenêtre, cette installation étant caractérisée en ce qu'elle est constituée :

- de lignes d'approvisionnement acheminant les pièces depuis des magasins distributeurs vers un circuit de montage constitué d'au moins un convoyeur pas à pas sur lequel sont fixées des platines-supports de pièces,
- des organes de prélèvement pour amener les pièces des lignes d'approvisionnement au circuit de montage,
- des moyens d'assemblage des pièces situés, par rapport au sens de déplacement du circuit, en aval des organes de prélèvement,
- des moyens pour le contrôle du positionnement et de l'assemblage des pièces sur leur platine-support respective.

Selon un mode de réalisation de l'invention, chaque ligne d'approvisionnement est constituée d'un couloir de distribution, tangent à un réceptacle vibrant contenant en vrac une catégorie de pièces à assembler, le plan de ce couloir étant situé dans le prolongement d'un organe de prélèvement.

Selon une caractéristique avantageuse de l'invention, les organes de prélèvement sont constitués de vérins dont le piston est pourvu d'une tête de préhension des pièces formée d'une pince à double mâchoire commandée sélectivement en ouverture ou en fermeture par vérin.

Selon une autre caractéristique préférentielle de l'invention, l'installation comprend un circuit principal de montage alimenté par une ou plusieurs voies dérivées de sous-ensembles pré-assemblés, ceux-ci convergeant vers un plan de référence linéaire et s'interconnectant avec l'autre sous-ensemble du circuit principal.

L'invention permet de réaliser de manière continue et contrôlée l'assemblage complet d'un boîtier de manoeuvre, et ceci automatiquement et de manière flexible.

Elle permet la combinaison de postes automatiques de montage de sous-ensembles avec des postes d'approvisionnement simples.

Selon l'art antérieur lorsque des sous-ensembles de boîtier devaient être assemblés préalablement à l'assemblage final des éléments du boîtier, le fabricant pouvait avoir recours à la sous-traitance avec des problèmes de qualité, de prix, de livraison spécifiques ou réaliser ces sous-ensembles lui-même, ces deux possibilités étant tributaires de leurs caractéristiques spécifiques quant à leur productivité. Grâce à l'invention ces problèmes sont résolus, grâce à une seule chaîne de montage automatique, qui permet de réaliser l'assemblage de sous-ensembles et la réalisation des ensembles complets intégrant ces derniers. A partir de l'approvisionnement des pièces jusqu'au produit final, un seul processus gère, assemble et contrôle.

La technique habituelle consiste à automatiser un poste de travail manuel, et éventuellement de réunir quelques postes ainsi réalisés. La présente invention considère l'automatisation de la tâche et non plus celle du poste de travail, automatisation du poste de travail qui imposait la présence d'un opérateur pour réaliser le contrôle ou l'exécution malgré l'automatisme. En automatisant les tâches, on réduit l'espace de l'occupation au sol des automates et ainsi on restreint l'environnement de l'ensemble des automates sur une ou plusieurs chaînes. Cette réduction spatiale est un facteur important du développement et de la continuité des tâches sans rupture pour stockage intermédiaire ou reprise et permet ainsi d'accroître la productivité.

De façon générale il est courant de constater que l'automatisation crée de nouveaux postes spécialisés et coûteux. En plus de la nécessité d'entretien et de commande par l'homme, en général le contrôle est réalisé par un opérateur, un préjugé voulant qu'une machine ne remplace le savoir faire d'un homme. Cette plus value à l'investissement est bien évidemment préjudiciable à l'optimisation de la productivité.

La présente invention par contre une fois mise en oeuvre ne nécessite qu'un conducteur de l'ensemble de l'installation et une personne pour son entretien, cette dernière travaillant en général sur plusieurs chaînes. Bien que la constitution de l'installation soit destinée à réaliser l'assemblage d'un produit le plus parfait possible il est prévu un agencement de contrôle qui agit par prélèvement. Pour ces autres raisons, la productivité est optimisée.

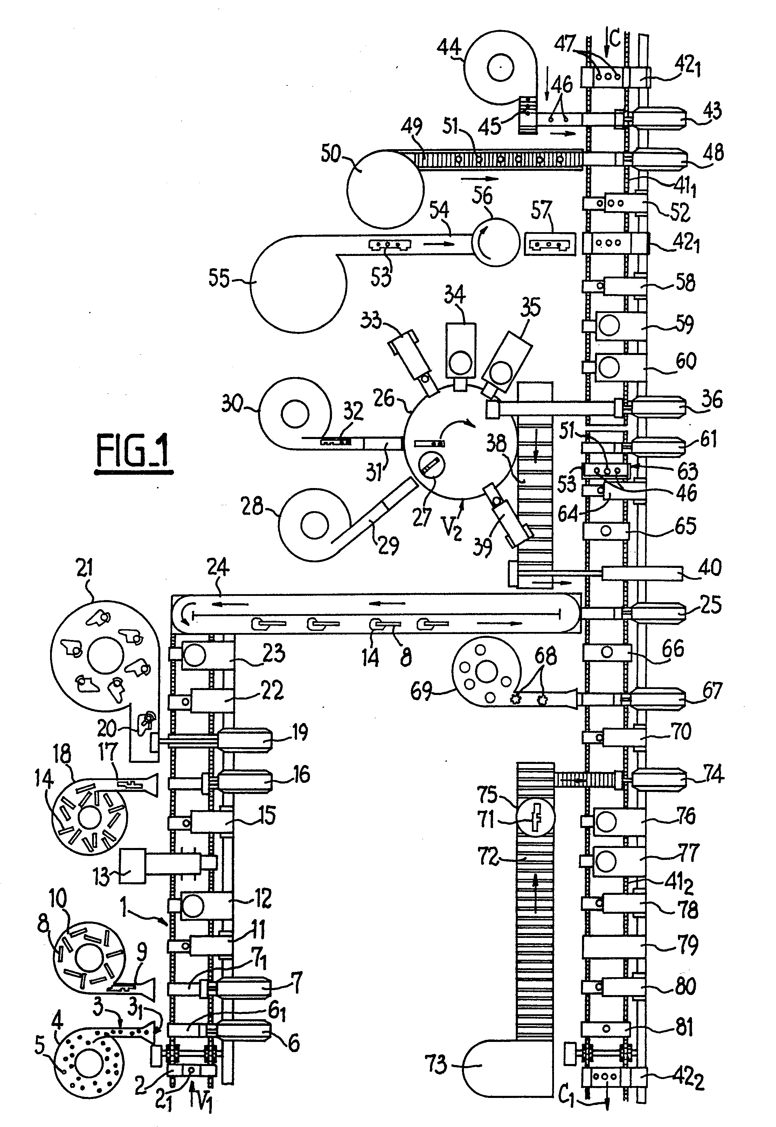

D'autres caractéristiques et avantages de l'invention ressortiront de la description ci-après et de l'unique dessin annexé qui est une vue schématique de l'ensemble de l'invention pour illustrer le circuit principal de montage ainsi que les deux voies dérivées de sous-ensembles pré-assemblés.

L'objet essentiel de l'invention est de permettre le montage en continu et sans intervention manuelle d'unité structurelle, qui, dans l'exemple considéré, est constituée d'un boîtier de crémone pour portes ou fenêtres. Ces boîtiers sont usuellement constitués de deux demi-coquilles formant le fond et le couvercle du boîtier, celles-ci renfermant les composants mécaniques élémentaires que sont notamment les tringles, la roue dentée d'entraînement, le fouillot et ses chevalets, ainsi que les axes et douilles permettant l'assemblage par rivetage des deux demi-coquilles constitutives du boîtier.

Bien que l'exemple qui va suivre se rapporte à ce cas particulier du boîtier de crémone, une installation globalement comparable pourrait bien entendu, être utilisée à d'autres fins et servir par exemple au montage en continu d'autres unités structurelles dans le domaine de la quincaillerie ou des ferrures sans sortir du cadre de l'invention.

L'installation, comme visible sur l'unique figure annexée, est constituée essentiellement d'un circuit principal de montage portant la référence C, celui-ci s'étendant, selon un plan de référence linéaire, le long duquel est distribué l'ensemble des postes de prélèvement, d'assemblage et de contrôle. Ce circuit principal est alimenté par un certain nombre de lignes d'approvisionnement placées transversalement au plan de référence linéaire C ainsi que par deux voies dérivées de sous-ensembles pré-assemblés, référencées $V_1$ et $V_2$.

La voie $V_1$ est constituée principalement d'un transporteur à chaînes 1, de type pas-à-pas, entraîné de façon connue par un moteur électrique et des pignons d'entraînement (non représentés). Sur ce transporteur sont fixées, à intervalles réguliers (selon une équidistance rigoureuse), des platines-supports 2 servant à la réception des pièces à assembler. Ces platines solidaires des maillons de la chaîne, se déplacent périodiquement de la distance égale à celle comprise entre deux postes successifs de l'installation. En partant de l'extrémité de la voie dérivée $V_1$ et en suivant le sens de la flèche correspondante, la platine-support 2 est tout d'abord alimentée par une première ligne d'approvisionnement 3 formée d'un couloir de distribution tangent à un magasin 4 se présentant sous la forme d'un réceptacle ouvert, de type vibrant, dans lequel est stockée une première catégorie de pièces à assembler par exemple, des axes 5. Ceux-ci, par vibration, sont progressivement acheminés (en se poussant les uns les autres) dans le couloir de distribution 3 situé en regard d'un organe de prélèvement 6 constitué d'un vérin dont le piston $6_1$ est dans le même alignement transversal que le couloir de distribution 3. Ce vérin est du type pneumatique et son piston $6_1$ (en position rétractée sur le dessin) peut se déployer pour venir au-dessus de l'extrémité $3_1$ du couloir de distribution 3 afin de saisir une pièce pour l'amener sur la platine-support 2 qui, entre temps, a avancé d'un cran, et se trouve par conséquent, dans le plan vertical du piston $6_1$. La saisie de la pièce 5 est réalisée par le piston $6_1$ qui comporte à cet effet une tête de préhension constituée, de façon usuelle, d'une double mâchoire commandée sélectivement en ouverture ou en fermeture, de manière à se refermer sur la pièce 5 lorsque l'extrémité du piston $6_1$ est située au-dessus du couloir de distribution 3, puis, se rétracter en maintenant la pièce pincée (pour venir dans la position rétractée, illustrée sur le dessin) et enfin, s'ouvrir à nouveau pour libérer la pièce et la positionner dans une alvéole $2_1$ portée par la platine-support 2.

Lorsque cette première opération est réalisée, le transporteur 1 avance à nouveau d'un pas de manière à ce que la platine-support 2 pourvue de la pièce 5 soit amenée dans le plan vertical du second organe de prélèvement 7 qui, à son tour, va saisir une seconde pièce 8 sur le couloir de distribution 9 du magasin 10. Le piston $7_1$ du vérin 7 fonctionne rigoureusement de la même manière que le piston $6_1$ du vérin 6.

Après ce second prélèvement, qui en fait, a pour but de saisir une pièce pour la mener sur le circuit de montage constitué par la voie dérivée V₁, on procède au contrôle de la présence des deux pièces 5 et 8 dans un poste 11 situé sur le trajet du transporteur à chaîne 1. Ce poste comporte deux palpeurs de type plongeur, formés de deux doigts positionnés rigoureusement dans le plan vertical des pièces portées par la platine 2 de manière à ce qu'ils rencontrent ces pièces au cours de leur descente et qu'ils enregistrent leur présence. Le transporteur à chaîne avance à nouveau d'un pas et la platine-support 2 est alors amenée à un premier poste de rivetage 12 assurant l'assemblage des pièces 5 et 8 portées par la platine-support 2. Ce poste de rivetage est constitué d'une tête gyroscopique agissant essentiellement sur l'extrémité de l'axe 5, destinée à l'assemblage des pièces entre elles.

On peut, éventuellement, prévoir en aval du poste de rivetage 12, un dispositif de retournement 13 des pièces si les deux éléments pré-assemblés en amont, ont, pour des besoins de montage, à être retournés de 180° comme c'est le cas ici. Le dispositif de retournement 13 est constitué d'un vérin à tête rotative comprenant des moyens de préhension tels que mâchoires, capables de saisir le chevalet sur la platine-support 2 puis de pivoter de 180° pour replacer ledit chevalet sur sa platine-support après renversement. Après cette opération, le transporteur 1 avance à nouveau d'un pas pour amener la platine-support en regard d'un poste de contrôle 15 identique au poste 11.

Quand l'opération de contrôle a été entérinée au poste 15, le transporteur à chaîne 1 avance à nouveau d'un pas pour amener la platine-support 2 à un nouvel organe de prélèvement 16 constitué d'un vérin et d'un piston à tête de préhension identique aux vérins 6 et 7. Ce vérin prélève sur le couloir de distribution 17 du magasin 18 un fouillot afin de l'amener sur le circuit de montage V₁.

Le transporteur à chaîne avance à nouveau d'un pas, d'amont en aval, pour amener la platine-support 2 en regard d'un nouveau poste de prélèvement 19 comparable aux postes 6, 7 et 16. Ce poste est alimenté par le couloir de distribution 20 d'un magasin 21 contenant un deuxième chevalet devant être assemblé aux trois pièces précédentes (axe 5, chevalet 8 et fouillot 14). Après avance d'un nouveau pas, la platine-support 2, pourvue maintenant de quatre pièces, est amenée à un poste de contrôle 22 identique au poste 11 (palpeur-plongeur) puis à un poste de rivetage 23 identique au poste 12.

Cette voie dérivée V₁ est raccordée au circuit principal de montage C par un convoyeur transversal 24 à rotation horizontale où sont représentés schématiquement le fouillot 14 et les chevalets 8.

Ce convoyeur 24 est situé en regard d'un organe de prélèvement 25 placé sur le circuit principal de montage et fonctionnant à la manière des postes 6, 7, 16 et 19.

La seconde voie dérivée d'alimentation V₂ est constituée d'une table rotative 26 sur laquelle sont disposés, selon des espacements angulaires prédéterminés, sept postes d'alimentation, de contrôle, de rivetage et de prélèvement.

La platine-support 27 fixée à la table rotative 26, est tout d'abord alimentée en éléments de liaison dentelés par un magasin vibrant 28 pourvu d'un couloir de distribution tangentiel 29 situé en regard de la platine-support 27. Le magasin vibrant 30 alimente, quant à lui, par son couloir de distribution 31, la platine-support 27 en tringles-crémaillères 32, celles-ci étant amenées par des moyens de préhension sur la plaquette 27. Bien entendu, la table rotative tourne d'une course angulaire égale à celle séparant deux postes consécutifs, les tringles-crémaillères 32 accouplées aux plaquettes délivrées par le magasin 28 étant ensuite amenées à un poste de contrôle 33 (palpeur-plongeur) puis, à deux postes de rivetage successifs 34, 35, destinés, dans le cas d'espèce, à assurer l'assemblage mécanique de la tringle-crémaillère avec sa plaquette correspondante. Lorsque cette double opération a été exécutée, la table rotative 36 tourne à nouveau d'un cran pour que la platine-support 27 vienne dans l'alignement d'un nouvel organe de prélèvement 36 destiné à saisir ce sous-ensemble pour l'amener sur un organe de transbordement 38 constitué d'un convoyeur à chaîne se déplaçant dans un plan parallèle au circuit principal de montage C. Un poste de contrôle à vide supplémentaire 39 est prévu sur la table rotative, pour vérifier que le sous-ensemble a bien été prélevé par l'organe 36 et qu'il n'est donc plus présent sur la platine 27 de la table rotative.

Ce sous-ensemble est acheminé par le convoyeur 38 à un nouvel organe de prélèvement 40 situé sur le circuit principal de montage C, cet organe étant constitué d'un vérin pneumatique à tête de préhension qui saisit le sous-ensemble sur le convoyeur 28 et l'amène, en fin de rétraction sur le transporteur à chaîne du circuit principal de montage.

Ainsi, les deux voies dérivées V₁ et V₂, auxiliaires au circuit principal de montage C, convergent pour interconnecter, selon un ordre prédéterminé, leurs deux sous-ensembles à l'autre sous-ensemble acheminé par le circuit principal de montage C.

Ce circuit principal de montage C comporte à l'instar de la voie dérivée V1, deux transporteurs à chaîne 41₁ en amont et 41₂ en aval, entraînés pas à pas par deux moteurs électriques, ces transporteurs comportant des platines support 42₁ et 42₂ respectivement solidaires des maillons de la chaîne

$41_1$ et $41_2$, lesdites platines étant amenées sélectivement et progressivement d'amont en aval à chacun des postes échelonnés le long du circuit principal de montage s'orientant selon un plan de référence linéaire.

La position amont du transporteur à chaîne $41_1$ est située à la hauteur de la platine-support $42_1$ et il en est de même pour le transporteur à chaîne $41_2$ et la platine-support $42_2$ (flèche $C_1$). Ainsi, si l'on suit successivement la platine-support $42_1$ d'amont en aval, on observe que celle-ci est en premier lieu amenée à un organe de prélèvement 43 formé d'un vérin dont le piston est pourvu d'une tête de préhension comparable aux autres organes de prélèvement échelonnés sur l'ensemble du circuit de montage. Ce poste de prélèvement 43 est alimenté par un magasin vibrant 44 pourvu d'un couloir de distribution 45, qui, en l'espèce, délivre deux douilles d'assemblage 46 destinés à être logés dans les orifices 47 de la platine-support $42_1$. Le piston du vérin 43 prélève par conséquent, par ses mâchoires, les deux douilles 46, se rétracte (pour venir au-dessus du circuit de montage C) puis dépose les deux douilles 46 dans les orifices 47 de la platine-support $42_1$.

Cette deuxième opération ayant été exécutée, le transporteur se déplace d'un cran afin d'amener la platine-support $42_1$ sous le vérin 48 alimenté par une ligne d'approvisionnement 49 assurant la jonction entre le magasin 50 et le circuit principal de montage. Le piston du vérin 48 se déploie pour venir saisir par sa double mâchoire une pièce telle qu'un axe 51, puis se rétracte à nouveau afin de la déposer sur la platine $42_1$ au côté des deux douilles 46. Le transporteur à chaîne $41_1$ avance à nouveau d'un pas pour amener la platine-support $42_1$ dans le plan vertical d'un poste de contrôle 52 qui s'assure de la présence effective des deux douilles 46 et de l'axe 51.

A ce stade, le convoyeur avance à nouveau d'un pas pour recevoir le couvercle 53 du boîtier de crémone, lequel est acheminé transversalement sur le circuit principal de montage par un couloir de distribution 54 relié à un magasin 55. A l'extrémité avant du couloir est prévue une tête d'orientation 56 fonctionnant, de façon connue, par cellule, cette tête ayant pour but de contrôler l'orientation du couvercle 53. En effet, dans le cas d'espèce, les couvercles, disposés en vrac dans le magasin 55, sont amenés par vibration dans le couloir de distribution 54 mais leur sens reste aléatoire, le magasin n'ayant pas qualité pour les placer forcément dans le bon sens. Il est donc nécessaire qu'une tête d'orientation vérifie si le couvercle est placé dans le bon sens, et dans la négative, puisse pivoter horizontalement de 180° pour amener le couvercle dans le sens voulu pour le cas où celui-ci serait dans une position erronée. C'est donc le rôle de la tête d'orientation de faire en sorte que le couvercle soit positionné sur la platine-support $42_1$ dans le sens désiré. La tête d'orientation 56 est suivie d'un bloc de positionnement 57 amenant le couvercle du boîtier sur la platine-support $42_1$ située en regard de ce bloc de positionnement.

La platine-support $42_1$ est ensuite amenée à un poste de contrôle 58 puis, successivement, à deux postes de rivetage 59, 60 réalisant successivement le rivetage des douilles et axe (délivrés par les lignes d'approvisionnement 45,49) sur le couvercle 53.

Après cette double opération d'assemblage, la platine $42_1$ est amenée à un poste d'inversion 61 formé d'un vérin pneumatique dont le piston comporte une tête rotative qui saisit le couvercle 53 assemblé aux axes et douille, et le retourne de 180° pour l'amener sur un autre convoyeur à chaîne $41_2$ (distinct du convoyeur $41_1$) dans la position illustrée en 63. On observe à ce poste, la présence du boîtier 53 et des deux douilles et axe 46 et 51 sur une platine $42_2$ du convoyeur $41_2$. Lorsque cette opération de retournement du couvercle 53 a été effectuée, le transporteur $41_2$ avance à nouveau d'un pas pour amener le sous-ensemble 53, 46, 51 à un nouveau poste de contrôle 64 puis à un poste de graissage 65 destiné à lubrifier les douilles et axe assemblés.

C'est à ce stade que sont interconnectés les deux sous-ensembles provenant des voies dérivées $V_1$, $V_2$, leur prélèvement respectif étant assuré par les vérins 40 et 25, reliés respectivement aux convoyeurs 38 et 24. Ainsi, le sous-ensemble plaquette et tringle-crémaillère 32 est amené du convoyeur 38 au circuit principal de montage par la tête du vérin 40, ce sous-ensemble étant placé dans le couvercle 53 parvenu à ce poste. C'est ensuite le sous-ensemble fouillot et chevalets, provenant de la voie dérivée $V_1$, qui est à son tour amené sur le circuit principal de montage par le vérin 25 dont la tête de préhension saisit ce sous-ensemble pour le disposer dans le couvercle 53 parvenu à ce poste. Après un nouveau graissage au poste 66, le couvercle 53 est amené au poste de prélèvement 67 alimenté par une ligne d'approvisionnement 68 raccordé à un magasin vibrant 69. Ce magasin délivre en l'espèce des roues dentées qui à nouveau sont saisies par la tête de préhension du vérin 67 pour être transférées du couloir de distribution 68 au circuit principal de montage. Le convoyeur avance à nouveau d'un pas pour être amené à un contrôle de présence de roues dentées 70 situé en aval de l'organe de prélèvement 67.

A ce stade, il ne reste plus qu'une seule pièce à accoupler aux trois sous-ensembles précédents qui sont d'ores et déjà regroupés, il s'agit du fond de boîtier 71 qui est acheminé sur le circuit principal de montage par un convoyeur indépendant 72 parallèle audit circuit. Il s'agit donc là d'une ligne d'approvisionnement autonome formée du couloir de distribution 72, raccordée à un magasin 73 dans lequel sont stockés les fonds de boîtier 71, ceux-ci étant prélevés sur le couloir 72 pour être amenés sur le circuit principal de montage par un organe de prélèvement 74 qui en l'espèce est constitué d'un vérin à tête de préhension comparable aux autres organes de prélèvement ci-dessus décrits. A l'instar de la ligne d'approvisionnement 54 assurant la distribution des couvercles 53, le couloir de distribution 72 est pourvu d'une tête rotative d'orientation 75 permettant de modifier le sens du fond de boîtier pour le cas où celui-ci serait positionné dans un sens erroné. Une cellule détecte le sens de défilement du fond du boîtier, et si celui-ci est erroné, la table rotative tourne dans un plan horizontal de 180° pour assurer le bon positionnement de la pièce.

Le fond de boîtier, qui a été saisi par le vérin 74, est positionné à ce stade sur le sous-ensemble formé du fond de boîtier accouplé aux deux autres sous-ensembles (plaquette et tringle-crémaillère et fouillot et chevalets), les axe et douilles 51 et 46 traversant des orifices ménagés dans le fond du boîtier 71 afin de faire légèrement saillie pour que leurs extrémités puissent être rivetées en vue de l'assemblage intégral et définitif du boîtier de crémone. Ces opérations de rivetage sont réalisées respectivement par les postes 76 et 77, le premier assurant le rivetage des extrémités des deux douilles 46, le second le rivetage de l'extrémité de l'axe 51.

Le boîtier de crémone ainsi assemblé est ensuite acheminé à un poste 78 de contrôle du filetage des douilles 46 qui présentent la particularité de comporter un taraudage destiné à la fixation ultérieure du boîtier de crémone sur l'ouvrant de la porte ou fenêtre. Après un nouveau contrôle de mise en position du boîtier à un poste 79, puis un contrôle subséquent de bon fonctionnement au poste 80, le boîtier est éjecté au poste 81 dans un bac de réception et la platine-support $42_2$ est alors à nouveau disponible pour un nouveau montage sur le circuit $41_2$.

L'installation telle que décrite ci-dessus fonctionne en continu sans aucune intervention manuelle et le cycle de fonctionnement est piloté par une commande assistée par ordinateur selon un logiciel qui ne fait pas partie intégrante de l'invention. Chaque phase du cycle est donc synchronisée avec l'avance des transporteurs et convoyeurs et la périodicité de fonctionnement des organes de prélèvement, de contrôle et de rivetage. L'ensemble des vérins de prélèvement sont de type pneumatique et sont asservis par la centrale électronique de pilotage tandis que les transporteurs et convoyeurs sont entraînés en déplacement pas-à-pas de façon usuelle par des moteurs électriques. Le détail des têtes de préhension et des organes de prélèvement n'a pas été décrit car les vérins à piston pourvus d'une tête comportant une mâchoire de saisie, sont connus en soi, bien qu'utilisés à d'autres fins. Les moyens de contrôle sont constitués de têtes pneumatiques pourvues de palpeurs-plongeurs. Les unités de rivetage sont commandées par moteur électrique. L'originalité de l'invention réside dans la combinaison inédite des différents moyens de distribution, de prélèvement, d'assemblage et d'acheminement des différentes pièces élémentaires réunies entre elles sans aucune intervention manuelle à travers un cycle préprogrammé et piloté par ordinateur.

Cette installation permet d'assembler en continu des boîtiers selon une cadence rigoureuse sans pour autant être limitée aux caractéristiques dimensionnelles et variantes techniques de cette famille de boîtiers de crémones.

Bien entendu une telle installation pourrait être utilisée pour le montage d'autres ensembles structurels car il suffirait, dans ce cas, de changer simplement les têtes de préhension des organes de prélèvement ainsi que le positionnement des palpeurs plongeurs sans rien changer au principe de l'invention pour autant qu'il s'agit de petites unités structurelles dont les composants sont de taille réduite pour pouvoir être acheminés aux lignes d'approvisionnement par simple vibration.

## Revendications

1 - Installation pour l'assemblage en continu de pièces élémentaires, complémentaires les unes des autres et destinées à former un ensemble structurel constituant un boîtier de crémone de porte ou fenêtre, installation caractérisée en ce qu'elle est constituée :
- de lignes d'approvisionnement (3, 9, 17, 20, 45, 49, 54, 38, 68, 72) acheminant les pièces constitutives du boîtier de crémone depuis les magasins distributeurs (4, 10, 18, 21, 44, 50, 55, 30, 28, 69, 72) vers un circuit de montage (C) constitué d'au moins un convoyeur pas-à-pas sur lequel sont fixées des platines-supports de pièces (2, $42_1$, $42_2$),
- d'organes de prélèvement (6, 7, 16, 19, 43, 48, 37, 61, 40, 25, 67, 74) pour amener les pièces des lignes d'approvisionnement au circuit de montage (C),
- de moyens d'assemblage des pièces (12, 23, 59, 60, 34, 35, 76, 77) situés, par rapport au sens de déplacement du circuit de montage (C), en aval des organes de prélèvement,
- de moyens (11, 22, 52, 58, 33, 64, 70, 78, 79, 80) pour le contrôle du positionnement et de l'assemblage des pièces sur leur platine-support respective (2, 42₁, 42₂).

2 - Installation selon la revendication 1, caractérisée en ce qu'un circuit de montage principal (C) s'étend selon au moins un plan de référence linéaire alimenté transversalement par les lignes d'approvisionnement ((3, 9, 17, 20, 45, 49, 54, 38, 68, 72) et les organes de prélèvement ((6, 7, 16, 19, 43, 48, 37, 61, 40, 25, 67, 74).

3 - Installation selon la revendication 1, caractérisée en ce que chaque ligne d'approvisionnement est constituée d'un couloir de distribution (3, 9, 17, 20, 45, 49, 54, 38, 68, 72) tangent à un réceptacle vibrant (4, 10, 18,21, 44, 50, 55, 30, 28, 69,73) contenant en vrac une catégorie de pièces à assembler, le plan transversal de chaque couloir étant situé dans le prolongement d'un organe de prélèvement.

4- Installation selon la revendication 1, caractérisée en ce que les organes de prélèvement sont constitués de vérins dont le piston est pourvu d'une tête de préhension des pièces.

5 - Installation selon la revendication 4, caractérisée en ce que la tête de préhension des pièces des organes de prélèvement est constituée d'une pince à double mâchoire commandée sélectivement en ouverture ou en fermeture par vérin.

6 - Installation selon la revendication 1, caractérisée en ce que les moyens d'assemblage des pièces (12, 23, 59, 60, 34, 35, 76, 77) sont formés d'unités de rivetage disposées ponctuellement le long du circuit de montage.

7 - Installation selon les revendications 1 et 2, caractérisée en ce que le circuit principal de montage est alimenté par une ou plusieurs voies dérivées (V₁, V₂) de sous-ensembles pré-assemblés, ceux-ci convergeant vers le plan de référence linéaire (C) et s'interconnectant avec le sous-ensemble dudit circuit principal.

8 - Installation selon la revendication 7, caractérisée en ce que l'une des voies dérivées (V₂) comporte une table rotative (26) à déplacement angulaire pas-à-pas, celle-ci comportant des lignes d'approvisionnement (29, 31), des platines-supports de pièces (27), des organes de prélèvement, des moyens (33) de contrôle de positionnement des pièces et des moyens de rivetage (34, 35), ladite table étant raccordée au circuit principal de montage (C) par un convoyeur (38), des moyens de saisie (37, 40) assurant respectivement le transfert des pièces depuis la table rotative (26) sur le convoyeur (38) puis, depuis celui-ci sur le circuit principal de montage (C).

9 - Installation selon la revendication 7, caractérisée en ce que l'une des voies dérivées (V₁) s'étend selon un plan de référence linéaire alimenté transversalement par des lignes d'approvisionnement et des organes de prélèvement.

10 - Installation selon la revendication 1, caractérisée en ce que les moyens de contrôle sont constitués de têtes pneumatiques pourvues de palpeurs-plongeurs.

11 - Installation selon la revendication 1, caractérisée en ce qu'elle comporte d'une part des moyens de retournement des pièces (13, 61), d'autre part des moyens d'inversion de sens des pièces par pivotement horizontal de 180° (56, 71).

12 - Installation selon la revendication 11, caractérisée en ce que les moyens de retournement des pièces (13, 61) sont constitués de têtes rotatives de préhension mues par vérins.

13 - Installation selon la revendication 11, caractérisée en ce que les moyens d'inversion (56, 71) de sens des pièces, par pivotement horizontal à 180°, sont constitués de têtes d'orientation commandées par cellule.

14 - Installation selon la revendication 1, caractérisée en ce qu'elle comprend des moyens de graissage (65) assurant la lubrification de l'ensemble structurel.

15 - Installation selon la revendication 1, caractérisée en ce qu'elle comporte en bout de circuit, des moyens de contrôle (81) du bon fonctionnement de l'ensemble structurel.

16 - Installation selon la revendication 7, caractérisée en ce que le circuit principal de montage (C) ainsi que les voies dérivées (V₁, V₂) de sous-ensembles sont formés de convoyeurs à chaîne (1, 24, 38, 41₁, 41₂) de type pas-à-pas.

17 - Installation selon l'une quelconque des revendications 1 à 16, caractérisée en ce que les vérins des organes de prélèvement (6, 7, 16, 19, 43, 48, 37, 61, 40, 25, 67, 74) et des moyens de contrôle (11, 22, 52, 58, 33, 64, 70, 78, 79, 80) sont pneumatiques.

18 - Installation selon la revendication 6, caractérisée en ce que les unités de rivetage (12, 23, 59, 60, 34, 35, 76, 77) sont commandées par moteur électrique.

19 - Installation selon l'une quelconque des revendications de 1 à 18, caractérisée en ce que son cycle de fonctionnement est piloté par une commande assistée par ordinateur.

## FIG.1

## Office européen des brevets

# RAPPORT DE RECHERCHE EUROPEENNE

Numero de la demande

EP 89 40 3269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | LANDIS & GYR-MITTEILUNGEN, vol. 35, no. 1, 1988, pages 2-6, Zug, CH; AREGGER, von BURG: "Flexibles, roboterunterstütztes Montagesystem für oszillierenden Getriebemotor." * En entier * | 1-10,14 -16 | B 23 P 21/00 // E 05 B 17/00 |
| A | IDEM --- | 19 | |
| Y | MACHINES PRODUCTION, no. 200, 2 mai 1978, pages 13-18, Sofetec. Boulogne/Seine, FR; "Assemblage automatique: où en est le Japon?" * Figure 6 * | 1-10,14 -16 | |
| A | IDEM --- | 19 | |
| A | FEINWERKTECHNIK & MESSTECHNIK, vol. 90, no. 6, septebre 1982, pages 71-72, Munich, DE; J. GAUTSCHI: "Automatische Montage von Manometerwerken" * Page 72, colonne de gauche, lignes 29-32 * --- | 11-13 | |
| A | FR-A-2 589 933 (FERCO) --- | | DOMAINES TECHNIQUES RECHERCHES (Int. Cl.5) B 23 P |
| A | EP-A-0 282 427 (FERCO) ----- | | |

Le présent rapport a été établi pour toutes les revendications

| Lieu de la recherche | Date d'achèvement de la recherche | Examinateur |
|---|---|---|
| LA HAYE | 27-02-1990 | RIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)